# EUROPEAN PATENT SPECIFICATION

(11) **EP 0 431 913 B1**
(45) Date of publication and mention of the grant of the patent: **08.11.1995**
(21) Application number: 90313189.4
(22) Date of filing: 05.12.1990
(51) Int. Cl.: G11B 23/087, G11B 15/61

(54) **Magnetic tape cassettes**
Magnetbandkassette
Cassettes à bande magnétique

(30) Priority: 06.12.1989 JP 317029/89
(43) Date of publication of application: 12.06.1991
(73) Proprietor: SONY CORPORATION, Tokyo 141 (JP)
(72) Inventor: Yanaka, Kiyotaka, c/o Patents Division, Shinagawa-ku, Tokyo 141 (JP)
(74) Representative: Cotter, Ivan John

(56) References cited:
- EP-A- 0 169 546
- EP-A- 0 260 000
- EP-A- 0 274 566
- GB-A- 2 163 409
- US-A- 3 686 470
- PATENT ABSTRACTS OF JAPAN vol. 13, no. 345 (P-909)(3693) 3 August 1989 & JP-A- 1 102 788 ( SONY CORP. ) 20 April 1989
- PATENT ABSTRACTS OF JAPAN vol. 7, no. 150 (P-207)(1295) 30 June 1983 & JP-A-58 060 475 ( SONY K.K. ) 9 April 1983

## Description

This invention relates to magnetic tape cassettes.

Known tape cassettes are provided with a mis-erase preventing means so that a signal recorded on a magnetic tape accommodated therein can be prevented from being erased inadvertently.

One known mis-erase preventing means comprises a mis-erase preventing tab which is integrally moulded with the tape cassette and this tab is cut away to avoid mis-erasure. In this type of mis-erase preventing means, the protruded tab, once cut away, cannot be attached to the tape cassette again. Moreover, unless the cutaway portion is closed by some other member, a new signal cannot ever be recorded on the magnetic tape. To solve this problem, a switching type of mis-erase preventing means has been proposed, in which a cassette casing is provided with a sliding member which is selectively slid between an erase possible position and a mis-erase preventing position, thereby to prevent the recorded signal from being erased inadvertently.

Japanese laid open patent specification 1/102788 describes the above-mentioned sliding member switching type of mis-erase preventing means. In this mis-erase preventing means, first and second engaging convex portions are formed on the sliding member in an opposing relation to each other with respect to the sliding member, Also, opposing first and second engaged concave portions are formed in insertion apertures of the cassette casing. Thus, when the first engaging convex portion is engaged with the first engaged concave portion, the sliding member is set in a first position, and when the second engaging convex portion is engaged with the second engaged concave portion, the sliding member is set in a second position, whereby the tape cassette is set in the erase possible state and in the mis-erase preventing state.

This mis-erase preventing means has the following problem. That is, when the first and second convex portions of the sliding member are disengaged from the first and second engaged concave portions of the insertion apertures or when the two engaging convex portions are disengaged from the two engaged convex portions and brought into contact with the inner wall surface of the insertion apertures, the two engaging convex portions are strongly urged against the inner wall surface, thereby hindering the sliding member from being slid smoothly, Accordingly, the sliding member must be pushed by a very large pushing force, and there is then the substantial risk that the sliding member or the cassette casing may be damaged.

Patent specification GB-A-2 163 409 discloses a tape cassette having an indicating member in a passage extending in the thickness direction through the cassette and comprising two chambers separated by a detent and outer end portions of smaller cross section, the indicating member comprising a spherical middle portion, which can be pressed past the detent so that it can move between the two chambers, and projecting portions which according to the position of the spherical middle portion can project into one or other of the outer end portions of the passage.

Patent specification EP-A-0 260 000 discloses a tape cassette with an aperture therein and an obstruction member mounted in the aperture and movable so as selectively to fill the aperture or open the aperture, the obstruction member having a pair of resilient positioning projections thereon one of which can engage one or other of two spaced positioning recesses corresponding to the two positions of the obstruction member to retain the obstruction member in the position in which it fills the aperture or the position in which it opens the aperture.

According to the invention there is provided a magnetic tape cassette in which a signal recorded on a tape-shaped record medium accommodated therein can be prevented from being erased inadvertently by a sliding member slidably inserted into a cassette casing in the thickness direction of the casing, the cassette comprising:
disengaging preventing stop means to prevent the sliding member from being disengaged from the cassette casing; and
positioning click stop means to engage the sliding member in one or another of two predetermined switching positions, in one of which a recorded signal can be erased and in the other of which the recorded signal can be prevented from being inadvertently erased, the disengaging preventing stop means and the positioning click stop means being independently provided between the sliding member and an insertion aperture formed through the cassette casing and into which insertion aperture the sliding member is inserted,
characterised in that the positioning click stop means comprises a click stop protrusion formed as a thin wall protrusion surface which can be resiliently deformed and is provided on one face of the sliding member and a concave click stop portion and a guide groove continuous to the concave click stop portion and both provided in the wall of the insertion aperture, the disengaging preventing stop means of the sliding member being provided on a different face of the sliding member to said one face thereof.

Thus, the magnetic tape cassette can be placed in the erase possible condition and the mis-erase preventing condition easily and positively. Further, when the protective plug is pushed too strongly in the switching operation or when the protective plug is worn, the protective plug can be prevented from being disengaged and the miserase can be positively avoided.

The invention will now be described by way of example with reference to the accompanying drawings, throughout which like parts are referred to by like references, and in which:
Figure 1 is a perspective view of a protective plug used in an embodiment of the present invention;
Figure 2 is a front view of the protective plug in an insertion aperture of a cassette casing;
Figure 3 is a diagrammatic view of a section on the line A - A of Figure 2;
Figure 4 is a perspective view illustrating an embodiment of magnetic tape cassette according to the present invention;
Figure 5 is a perspective view used to show a relationship between the magnetic tape cassette and a head drum;
Figure 6 is a plan view illustrating the magnetic tape cassette from below; and
Figure 7 is a partial plan view illustrating the head drum and the magnetic tape cassette from below when the head drum is inserted into the magnetic tape cassette.

The embodiment of magnetic tape cassette to be described is of a very small type, and comprises a cassette casing 1 accommodating therein a magnetic tape T on and from which a pulse code modulated (PCM) signal is recorded and reproduced. The cassette casing 1 is formed by fastening an upper half or an upper part 2 and a lower half or a lower part 3 by screws 4, and a lid 6 is rotatably supported on the cassette casing 1 so as to open and close an opening 5 formed on the front surface sides of the upper and lower parts 2 and 3.

The tape T is wound around a pair hubs 7 and 8 provided in correspondence with hub drive shaft insertion apertures 2a, 2b and 3a, 3b. A portion of the tape T is exposed at the opening 5 by being extended between pinch rollers 9 and 10 serving as guide rollers and pivotally supported at respective sides of the opening 5.

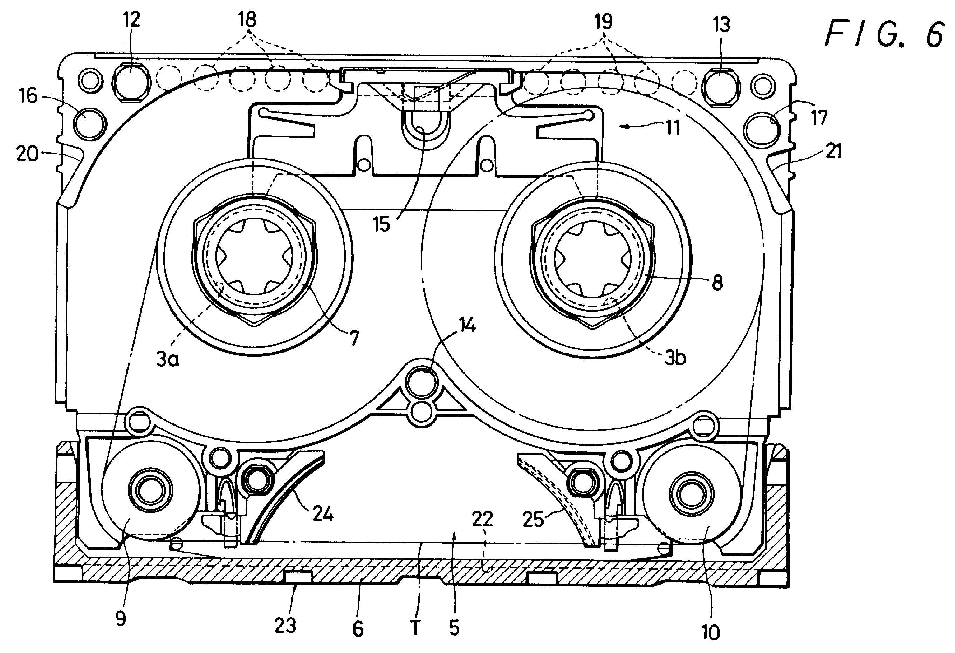

As shown in, for example, Figure 6, a brake mechanism 11 is provided within the cassette casing 1 to brake the two hubs 7 and 8 when the tape cassette is not in use. Mis-erase preventing mechanisms 12 and 13 are provided on the upper and lower surface sides of the cassette casing 1 at its two rear corner portions so as to communicate with the upper and lower parts 2 and 3. Positioning reference apertures 14, 15 and 16, 17 are respectively formed on the cassette casing 1 at its front and back positions in the front to back direction and at its two rear side portions in the lateral direction. A plurality of predetermined detection holes 18 and 19 are formed on the cassette casing 1 at its rear edge portion in the lateral direction. Grip portions 20 and 21 are formed on the rear portions of two side walls of the cassette casing 1.

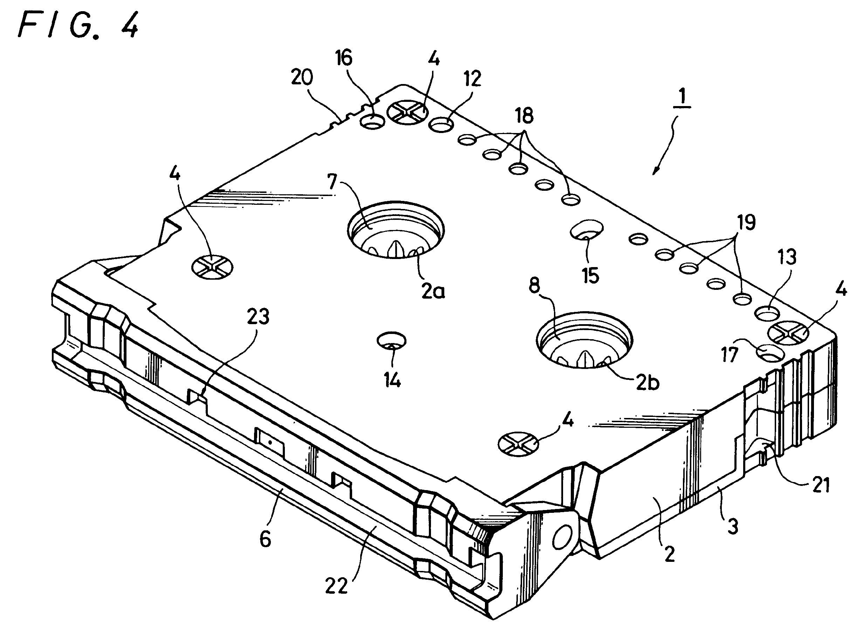

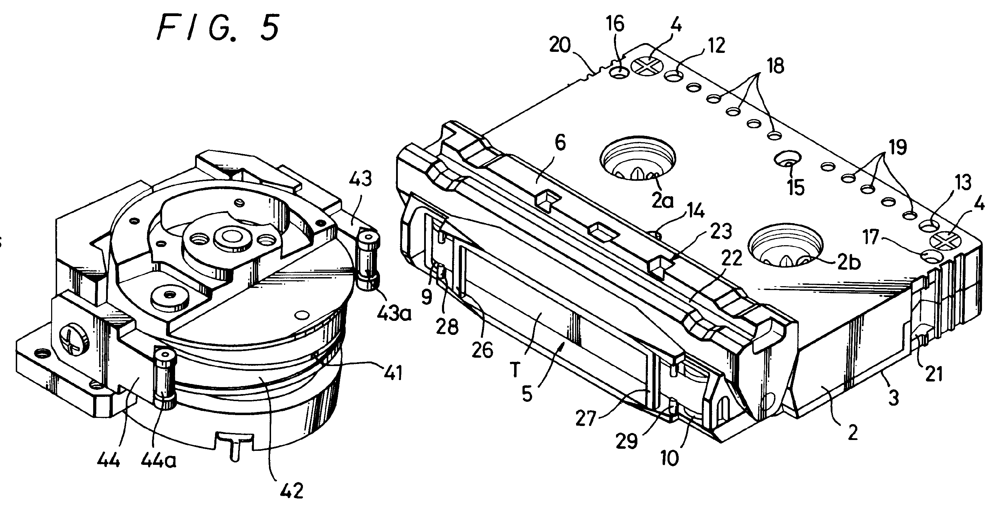

As shown in, for example, Figures 4 and 5, a changer engaging portion 23 is formed along a guide groove 22 extending along the width direction of the lid 6.

In this tape cassette, the tape T accommodated within the cassette casing 1 is recorded and/or reproduced by a rotary head using a helical scan system.

More specifically, as shown in Figure 5, a rotary head 41 is rotated at a predetermined slant angle relative to a head drum 42, and the head drum 42 is partly inserted into the opening 5 which is opened by rotating the lid 6 in the upper or lower direction. The tape T extended across the opening 5 is slidably moved so as to be wound around the insertion side peripheral surface of the head drum 42. Thus, when the rotary head 41 is rotated, oblique tracks are formed on the tape T.

In this embodiment, in order to ensure that tape T is brought into slidable contact with the head drum 41 in a helical fashion, as shown in Figure 6, a pair of tape guide members 24 and 25 whose guide portions are inclined in opposite directions are disposed in the insertion portion of the opening 5 for the head drum 42 at the positions inside the pinch rollers 9 and 10, such that they can be oscillated and moved in the lateral direction in an opposing fashion. When the head drum 42 is inserted into the opening 5, the tape guide members 24 and 25 come into contact with the peripheral surface of the head drum 42, and guide the tape T so that is sandwiched between them and the peripheral surface of the head drum 42.

As shown in Figure 5, the head drum 42 has at respective side portions, wing guides 43 and 44 which are inserted into the spaces between the pinch rollers 9 and 10 and the tape guide members 24 and 25 at each side of the opening 5. Rollers 43a and 44a are mounted on the front end portions of the two wing guides 43 and 44 respectively, and are brought into slidable contact with the tape T, urging the tape T against the tape guide members 24 and 25.

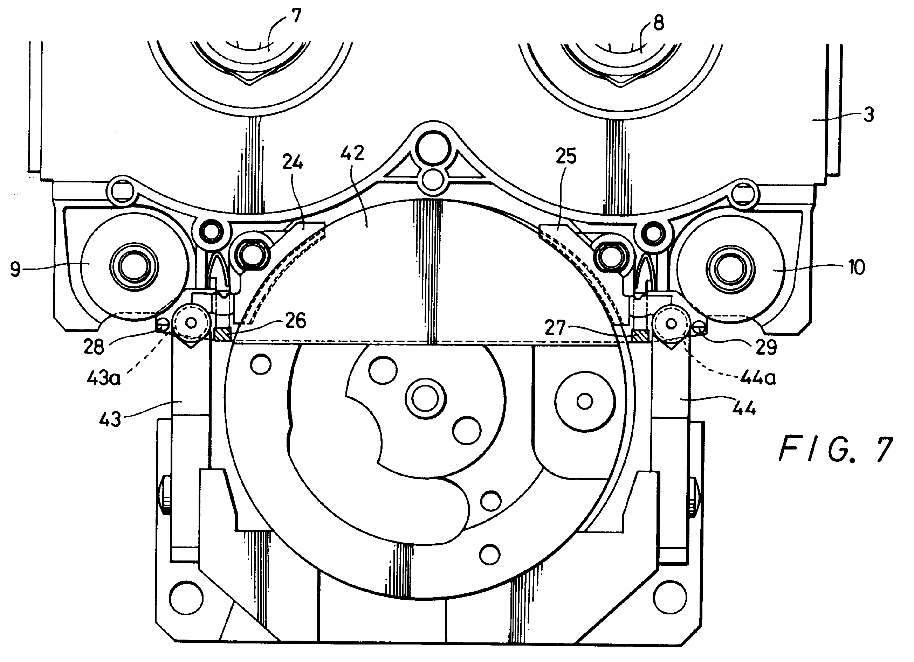

As shown in Figure 7, both the wing guides 43 and 44 are inserted into the opening 5 of the cassette casing 1 such that they are positioned in the spaces between supporting elements 26 and 27 provided near the inside of the opening 5, and tape projection preventing guide protrusions 28 and 29 positioned between the supporting elements 26 and 27 and the pinch rollers 9 and 10.

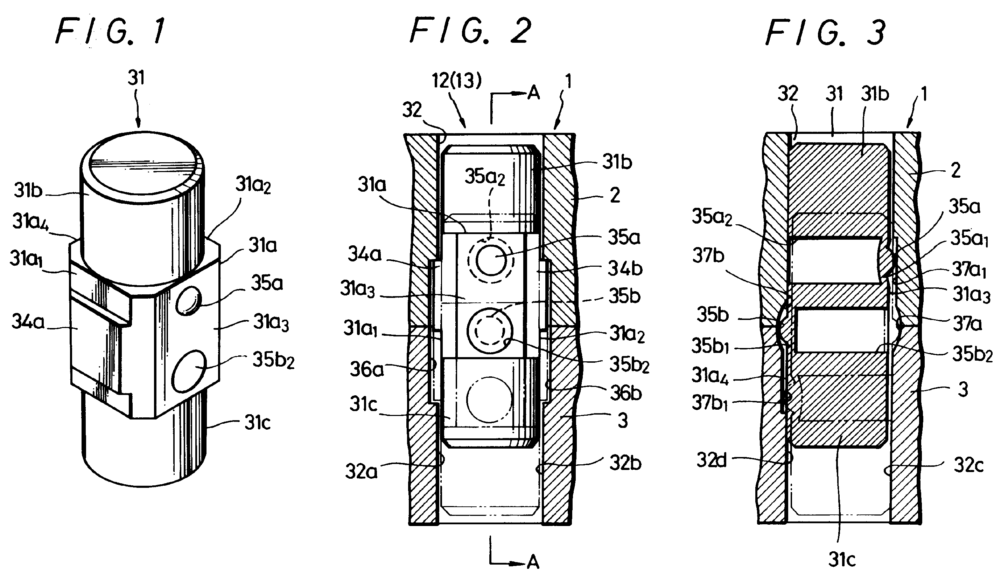

In this tape cassette, the mis-erase preventing mechanisms 12 and 13 disposed in the cassette casing 1 will be described in detail with reference to Figures 1 to 3. Since the two mis-erase preventing mechanisms 12 an 13 are constructed the same, one mis-erase preventing mechanism 13 is not shown in Figures 1 to 3.

In each of the mis-erase preventing mechanisms 12 and 13, a mis-erase preventing detection sliding member 31 is slidably inserted into an insertion aperture 32 which is formed through the cassette casing 1 at its rear side portion in the thickness direction of the cassette casing 1.

The sliding member 31 is moulded of synthetic resin or the like which can be resiliently deformed. The length of the sliding member 31 is shorter than that of the insertion aperture 32. An intermediate portion 31a thereof is formed to have a cross-section which is substantially quadrilateral. Two end portions 31b and 31c thereof are formed to have circular cross-sections. The intermediate portion 31a has formed on its surfaces 34a1 and 34a2 opposing in one direction disengaging preventing stop means in the form of convex surfaces 34a and 34b placed at the central portions in an opposing relation. The intermediate portion 31a has formed on the other opposing surfaces 31a3 and 31a4, click stop protrusions 35a and 35b of substantially hemispherical configuration. The click stop protrusions 35a and 35b are displaced at a predetermined spacing from each other relative to the length direction of the sliding member 31 such that, even when the sliding member 31 is inverted, the click stop protrusions 35a and 35b can be located at the same positions.

Protrusion surfaces 35a1 and 35b1 of the click stop protrusions 35a and 35b are thin, so that they can be slightly resiliently deformed. That is, the protrusion surfaces 35a1 and 35b1 are formed thin by forming spot facing holes 35a2 and 35b2 having predetermined depths from the surfaces facing the protrusion surfaces of the click stop protrusions 35a and 35b.

On the other hand, the insertion aperture 32 into which the sliding member 31 is inserted, is a hollow portion having an inner diameter nearly equal to the diameter of the transverse cross-section of the intermediate portion 31a of the sliding member 31. The insertion aperture 32 is formed through the upper part 2 to the lower part 3, and opposing disengaging preventing stop means in the form of concave surfaces 36a and 36b are formed on inner wall surfaces 32a and 32b of the insertion aperture 32 opposing the stop convex surfaces 34a and 34b of the sliding member 31 across the jointed portion of the upper and lower parts 2 and 3 of the casing 1 such that the stop convex surfaces 34a and 34b are slidably engaged therewith in the longitudinal direction of the insertion aperture 32. The stop convex surfaces 34a and 34b are moved and engaged with the stop concave surfaces 36a and 36b, whereby the stroke of the sliding member 31 is restricted.

Click stop concave portions 37a and 37b are formed on the inner wall surfaces of the insertion aperture 32 opposing each other, that is on its surfaces 32c and 32d opposing the click stop protrusions 35a and 35b of the sliding member 31 across the joined portion of the upper and lower parts 2 and 3 of the cassette casing 1, such that the click stop concave portions 37a and 37b may be engaged with the click stop protrusions 35a and 35b. A guide groove 37a1 extending to the upper part 2 side is formed to be continuously communicated with the click stop concave portion 37a corresponding to one click stop protrusion 35a. A guide groove 37b1 extending to the lower part 3 side is formed to be continuously communicated with the click stop concave portion 37b corresponding to the other click stop protrusion 35b. The two guide grooves 37a1 and 37b1 are shallower than the click stop concave portions 37a and 37b, respectively.

The operation of the mis-erase preventing mechanisms 12 and 13, which are formed by the sliding members 31 and the insertion apertures 32, will now be explained.

Firstly, when the sliding member 31 in the insertion aperture 32 is located within the insertion aperture 32 at its upper position in the thickness direction of the cassette casing 1, that is when it is located on the upper part 2 side, the stop convex surfaces 34a and 34b of the sliding member 31 are respectively positioned in the stop concave surfaces 36a and 36b of the insertion apertures 32 at the upper part 2 side, as shown by the solid lines in Figures 2 and 3, and under this condition, the click stop protrusion member 35b is in engagement with the click stop concave portion 37b. Since the click stop protrusion members 35a and 35b are positionally displaced from each other, one click stop protrusion 35a is not engaged with one click stop concave surfaces 37a and is urged against the guide groove 37a1 continued to the upper part 2 side. In this state, the click stop protrusion 35a is pushed by an appropriate predetermined pushing force because the guide groove 37a1 urged therewith has the level difference between it and the inner wall surface of the insertion aperture 32 and the protrusion portion surface 35a1 is resiliently deformed. By this pushing force, the other click stop protrusion 35b is urged against and engaged with the other click stop concave portion 37b, so that the sliding member 31 is positively positioned and held at the upper side of the insertion aperture 32.

When the sliding member 31 is located at the lower position of the insertion aperture 32, that is, located at the lower part 3 side, as shown by two-dot chain lines in Figures 2 and 3, the stop convex surfaces 34a and 34b are brought into contact with the stop concave surfaces 36a and 36b in the lower part 3 side. Under this condition, one click stop protrusion 35a is engaged with one click stop concave portion 37a. The other click stop portion 35b is disengaged from the other click stop concave portion 37b and is urged against the guide groove 37b1 continued to the lower part 3 side.

In this state, similarly to the case that the sliding member 31 is located at the upper position, one click stop protrusion 35a is similarly urged against and engaged with one click stop concave portion 37a by an appropriate pushing force of the other click stop protrusion 35b, whereby the sliding member 31 is positively placed at the lower side of the insertion aperture 32.

In the position switching operation of the sliding member 31, since the sliding member 31 is moved under the condition that the click stop protrusions 35a and 35b are brought into slidable contact with the inner surfaces of the guide grooves 37a1 and 37b1 continued to the click stop concave portions 37a and 37b, the position of the sliding member 31 can be switched stably and smoothly. Particularly, in this embodiment, since the click stop protrusions 35a and 35b are flexibly deformed in the direction in which they are pushed, the sliding member 31 can be moved more smoothly, and the click stop protrusions 35a and 35b can be engaged with the click stop concave portions 37a and 37b more positively.

In the position switching operation of the sliding member 31, when the sliding member 31 is pushed by a larger pushing force than is necessary, so that the click stop protrusions 35a and 35b pass over the click stop concave portions 37a and 37b, the stop convex surfaces 34a and 34b are contacted with and engaged with the end edges of the stop concave surfaces 36a and 36b of the insertion aperture 32 thereby to inhibit the sliding member 31 from being slid further, thus preventing the sliding member 31 from being disengaged from the insertion aperture 32.

As described above, the position of the sliding member 31 can be changed relative to the insertion aperture 32 of the cassette casing 1, and this change of the position is detected by a detecting switch through a detecting pin or the like, whereby the two conditions of the erase possible condition and the mis-erase preventing condition can be identified positively.

The mis-erase preventing mechanisms 12 and 13 of this embodiment can perform exactly the same position switching operation, that is, detecting operation as described above even when they are inverted in their up to down direction.

Various modifications can be effected. For example, the shape of the transversal section of the sliding member 31 and the inner shape of the insertion aperture 32 are not limited to quadrilaterals and may be hexagonal or the like, in which the stop means can be formed of at least two opposing surfaces and the click stop means can be formed of other two opposing surfaces.

As described above, the switching operation of the sliding member can be stably and smoothly carried out, whereby the magnetic tape cassette can be positively placed in the erase possible condition and the mis-erase preventing condition with ease.

Moreover, when the sliding member is pushed by a larger pushing force that is necessary in this switching operation, or when the click stop means is worn, the sliding member can be prevented from being disengaged from the inserted aperture and mis-erasure can be positively avoided, so the magnetic tape cassette is reliable.

## Claims

1. A magnetic tape cassette in which a signal recorded on a tape-shaped record medium (T) accommodated therein can be prevented from being erased inadvertently by a sliding member (31) slidably inserted into a cassette casing (1) in the thickness direction of the casing (1), the cassette comprising:
disengaging preventing stop means (34a, 34b, 36a, 36b) to prevent the sliding member (31) from being disengaged from the cassette casing (1) ; and
positioning click stop means (35a, 35b) to engage the sliding member (31) in one or another of two predetermined switching positions, in one of which a recorded signal can be erased and in the other of which the recorded signal can be prevented from being inadvertently erased, the disengaging preventing stop means (34a, 34b, 36a, 36b) and the positioning click stop means (35a, 35b) being independently provided between the sliding member (31) and an insertion aperture (32) formed through the cassette casing (1) and into which insertion aperture the sliding member (31) is inserted,
characterised in that the positioning click stop means (35a, 35b) comprises a click stop protrusion (35a, 35b) formed as a thin wall protrusion surface (35a1, 35b1) which can be resiliently deformed and is provided on one face (31a3, 31a4) of the sliding member (31) and a concave click stop portion (37a, 37b) and a guide groove (37a1, 37b1) continuous to the concave click stop portion (37a, 37b) and both provided in the wall of the insertion aperture (32), the disengaging preventing stop means (34a, 34b) of the sliding member (31) being provided on a different face (34a1, 34a2) of the sliding member to said one face (31a3, 31a4) thereof.

2. A cassette according to claim 1 wherein said sliding member (31) has two end portions (31b, 31c) of cylindrical configuration and a central portion (31a) of rectangular configuration.

3. A cassette according to claim 1 wherein a pair of said sliding members (31) are provided on a rear wall portion of said cassette casing (1).

4. A cassette according to claim 1 wherein an aperture (32) into which said sliding member (31) is inserted is formed through an upper half (2) and a lower half (3) of said cassette casing (1).

## Patentansprüche

1. Magnetbandkassette, in der durch ein Gleitstück (31), das gleitend in ein Kassettengehäuse (1) in Richtung der Stärke des Gehäuses (1) eingesetzt ist, verhindert wird, daß ein auf einem darin untergebrachten bandförmigen Aufzeichnungsmedium (T) aufgezeichnetes Signal versehentlich gelöscht wird, wobei die Kassette folgendes aufweist:
Ablöseverhinderungs-Anschlagmittel (34a, 34b, 36a, 36b) um zu verhindern, daß das Gleitstück (31) sich von dem Kassettengehäuse (1) ablöst und
Positionierungseinrastmittel (35a, 35b) zum Eingreifen des Gleitstückes (31) in der einen oder der anderen von zwei vorbestimmten Schaltpositionen, wobei in einer dieser Positionen ein aufgezeichnetes Signal gelöscht werden kann und in der anderen dieser Positionen verhindert wird, daß das aufgezeichnete Signal versehentlich gelöscht wird und wobei die Ablöseverhinderungs-Anschlagmittel (34a, 34b, 36a, 36b) und die Positionierungseinrastmittel (35a, 35b) unabhängig voneinander zwischen dem Gleitstück (31) und einer Einführungsöffnung (32) bereitgestellt werden, die durch das Kassettengehäuse (1) hindurchgehend ausgebildet ist und in die das Gleitstück (31) eingeführt ist
**dadurch gekennzeichnet**, daß die Positionierungseinrastemittel (35a, 35b) folgendes aufweisen:
einen Einrastvorsprung (35a, 35b), der als eine dünnwandige Vorwölbung in der Oberfläche (35a1, 35b1) ausgebildet ist, die federnd verformbar ist und auf einer Fläche (31a3, 31a4) des Gleitstückes (31) bereitgestellt ist und
ein konkaves Einrastteil (37a, 37b) und eine Führungsnut (37a1, 37b1) durchgehend zu dem konkaven Einrastmittel (37a, 37b), die beide in der Wand der Einführungsöffnung (32) angeordnet sind, wobei die Ablöseverhinderungs-Anschlagmittel (34a, 34b) des Gleitstückes (31) an einer Fläche (34a1, 34a2) des Gleitstückes, die sich von der besagten einen Fläche (31a3, 31a4) unterscheidet, angeordnet sind.

2. Kassette nach Anspruch 1, worin das Gleitstück (31) zwei Endbereiche (31b, 31c) mit zylindrischer Gestalt und einen zentralen Bereich (31a) mit rechtwinkliger Gestalt aufweist.

3. Kassette nach Anspruch 1, worin ein Paar von Gleitstücken (31) im rückwandigen Bereich des Kassettengehäuses (1) angeordnet ist.

4. Kassette nach Anspruch 1, in der eine Öffnung (32), in die das Gleitstück (31) eingeführt ist, durch eine obere Hälfte (2) und eine untere Hälfte (3) des besagten Kassettengehäuses (1) ausgebildet ist.

## Revendications

1. Cassette de bande magnétique, dans laquelle on peut empêcher l'effacement par inadvertance d'un signal enregistré sur un support d'enregistrement (T) en forme de bande, au moyen d'un élément coulissant (31) qui est introduit en coulissement dans un boîtier de cassette (1), dans la direction de l'épaisseur du boîtier (1), la cassette comprenant :
- des moyens d'arrêt pour empêcher un dégagement (34a, 34b, 36a, 36b) afin d'empêcher à l'élément coulissant (31) d'être dégagé par rapport au boîtier de cassette (1); et
- des moyens d'arrêt à encliquetage de positionnement (35a, 35b) pour engager l'élément coulissant (31) dans l'une ou l'autre de deux positions de commutation prédéterminées, telles que dans une position on peut effacer un signal enregistré et que dans l'autre position on peut empêcher l'effacement par inadvertance du signal enregistré, les moyens d'arrêt empêchant le dégagement (34a, 34b, 36a, 36b) et les moyens d'arrêt à encliquetage de positionnement (35a, 35b) étant prévus de façon indépendante entre l'élément coulissant (31) et une ouverture d'introduction (32) formée à travers le boîtier de cassette (1), et l'élément coulissant (31) étant introduit dans ladite ouverture d'introduction,
caractérisée en ce que les moyens d'arrêt à encliquetage de positionnement (35a, 35b) comprennent une saillie d'arrêt à encliquetage (35a, 35b) formée sous la forme d'une surface en saillie sur une paroi mince (35a1, 35b1) qui peut être élastiquement déformée et qui est prévue sur une face (31a3, 31a4) de l'élément coulissant (31), et une partie d'arrêt à encliquetage concave (37a, 37b) et une gorge de guidage (37a1, 37b1) continue jusqu'à la partie d'arrêt à encliquetage concave (37a, 37b), et toutes deux étant prévues dans la paroi de l'ouverture d'introduction (32), les moyens d'arrêt (35a, 35b) qui empêchent le dégagement de l'élément coulissant (31) étant prévus sur une face (34a1, 34a2) de l'élément coulissant différente de ladite première face (31a3, 31a4) de celui-ci.

2. Cassette selon la revendication 1, dans laquelle ledit élément coulissant (31) comporte deux parties d'extrémité (31b, 31c) de configuration cylindrique et une partie centrale (31a) de configuration rectangulaire.

3. Cassette selon la revendication 1, dans laquelle on prévoit une paire desdits éléments coulissants (31) sur une partie de paroi arrière dudit boîtier de cassette (1).

4. Cassette selon la revendication 1, dans laquelle une ouverture (32), dans laquelle est introduit ledit élément coulissant (31), est formée à travers une moitié supérieure (2) et une moitié inférieure (3) dudit boîtier de cassette (1).
